# EUROPÄISCHE PATENTSCHRIFT

(11) **EP 3 617 568 B1**
(45) Veröffentlichungstag und Bekanntmachung des Hinweises auf die Patenterteilung: **06.10.2021**
(21) Anmeldenummer: 18191968.9
(22) Anmeldetag: 31.08.2018
(51) Int. Cl.: F16K 15/06, F16K 31/44, F16K 31/524, A61C 1/00

(54) **REGELVENTIL-ANORDNUNG FÜR EINE VERBINDUNGSVORRICHTUNG ZWISCHEN EINEM DENTALEN INSTRUMENT UND EINEM VERSORGUNGSSCHLAUCH**
REGULATING VALVE ARRANGEMENT FOR A CONNECTING DEVICE BETWEEN A DENTAL INSTRUMENT AND A SUPPLY HOSE
ENSEMBLE SOUPAPE DE RÉGULATION POUR UN DISPOSITIF DE RACCORDEMENT ENTRE UN INSTRUMENT DENTAIRE ET UN TUYAU FLEXIBLE D'ALIMENTATION

(43) Veröffentlichungstag der Anmeldung: 04.03.2020
(73) Patentinhaber: KaVo Dental GmbH, 88400 Biberach (DE)
(72) Erfinder: Krüger, Dennis, 89081 Ulm (DE); Lott, Herbert, 88410 Bad Wurzach (DE); Stempfle, Johann, 89284 Pfaffenhofen (DE)
(74) Vertreter: Thun, Clemens

(56) Entgegenhaltungen:
- EP-A2- 2 939 789
- WO-A2-95/31955
- FR-A1- 2 398 943
- JP-A- 2002 153 775
- US-A- 3 289 694
- US-A- 4 512 358

## Beschreibung

Die Erfindung betrifft eine Regelventil-Anordnung für eine Verbindungsvorrichtung zwischen einem dentalen Instrument und einem Versorgungsschlauch.

Zwischen einem dentalen Instrument und einem Versorgungsschlauch befindet sich üblicherweise ein Koppelbereich mit Verbindungsleitungen für Medien, beispielsweise Fluide wie Luft und Wasser; weiterhin weist ein solcher Koppelbereich typischerweise Verbindungseinrichtungen für eine elektrische Versorgung des Instruments und für Signalübertragungen von und zu dem Instrument auf. Dabei ist es auch bekannt, in einem solchen Koppelbereich ein Ventil in einer entsprechenden Fluidleitung zu integrieren, um die Menge der durchfließenden Fluids zu regeln oder den Durchfluss zu sperren.

Grundsätzlich besteht hierbei das Bedürfnis, den Koppelbereich möglichst kleinräumig zu gestalten. Allerdings ist dies oft problematisch, insbesondere im Fall von Koppelbereichen, die sowohl zur Übertragung von Fluiden, als auch zur Übertragung von elektrischem Strom gestaltet sind ("gemischte Koppelbereiche"), wie das beispielsweise im Fall von Piezohandstücken, so genannten "Scalern" der Fall ist, denn hier erfordern die vielen Kontakt- und Verbindungsstellen entsprechend viel Raum. Erschwerend kommt hinzu, dass hierbei entsprechende Vorgaben zur Einhaltung von Luft- und Kriechstrecken berücksichtigt werden müssen.

Ventilanordnungen sind aus dem Stand der Technik in den verschiedensten Varianten bekannt. Beispielsweise zeigen die WO 95/31955 A2, die US 4,512,358 oder die US 3,289,694 drei unterschiedliche Ventilanordnungen, die allerdings jeweils für bestimmten Einsatzgebiete vorgesehen sind und aufgrund ihrer Ausgestaltung oder Funktion nicht für den Einsatz in Koppelbereichen für dentalen Instrumente geeignet sind.

Im Hinblick auf das Anwendungsgebiet der vorliegenden Erfindung ist aus dem Stand der Technik ein Schlauchstecker für dentale Motoren bekannt, der elektrische Verbindungsvorrichtungen und Koppelstellen für Luft und Wasser umfasst. Dieser Stecker weist eine Wasserleitung, die hier durch einen elastischen Schlauch gebildet ist, mit einem Regelventil auf; dabei erfolgt die Regelung durch ein Klemmen bzw. Quetschen des Schlauchs. Allerdings hat das Quetschen des Schlauchs Nachteile, denn die Durchflussraten können sich durch Alterung des Schlauchmaterials im Laufe der Zeit ändern. Ein Öffnungsvorgang des Schlauch-Querschnitts ist abhängig von der Rückstellelastizität des Schlauchwerkstoffs und auch abhängig von der Länge des Zeitraums, für den sich der Schlauch vor dem Öffnungsvorgang in einem gequetschten Zustand befunden hat. Wenn sich der Schlauch über einen längeren Zeitraum in einem geschlossenen, also gequetschten Zustand befunden hat, besteht die Gefahr, dass der ursprüngliche Volumenstrom und somit die gewünschte Durchflussmenge nach dem Öffnungsvorgang nicht mehr erzielt wird. Außerdem hat die Praxis gezeigt, dass sich der Schlauch bisweilen - beispielsweise aufgrund von Fissuren - nicht so dicht wie gewünscht absperren lässt.

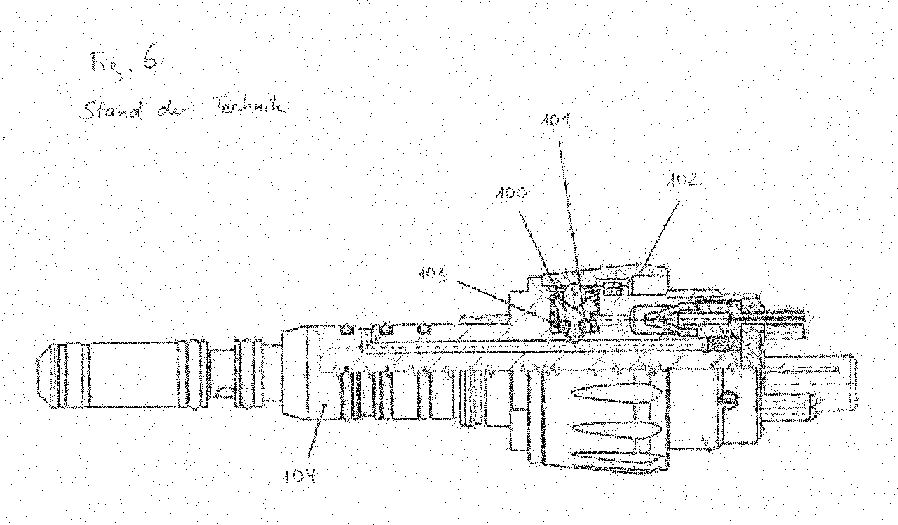

Ein weiterer Stand der Technik in Form einer so genannten Multiflex-Kupplung ist in Fig. 6 in einem Teil-Längsschnitt gezeigt. Diese Kupplung weist eine Medienleitung mit einer Regelung über einen Ventilstößel 100 auf. Im gesperrten Zustand verschließt der Ventilstößel 100 mit einer stirnseitigen Dichtung in Form eines O-Rings 101 den Medienauslass. Verschlossen und geregelt wird das Ventil über eine Schaltkulisse in einem Drehring 102. Geöffnet wird das Ventil durch eine Feder 103, die den Ventilstößel 100 gegen die Schaltkulisse anstellt. Das Medium steht im geschlossenen Zustand im Ventil, die Zuleitung wird nicht verschlossen. Zuleitung und Ausgang sind dabei um 90° versetzt und exzentrisch zum Kupplungszapfen 104 angeordnet. Allerdings ist hier der Raumbedarf beträchtlich, so dass eine entsprechende Anordnung beispielsweise im Fall eines Piezohandstücks wenig geeignet ist. Typischerweise wird im Fall eines Piezohandstücks das Spraywasser zentral in einem Fluidstecknippel über ein integriertes Fluidregelventil geleitet, wobei der Fluidstecknippel von vielen elektrischen Kontakten umgeben ist, so dass der Raum für einen Zugang zum Regeln des Ventils deutlich begrenzt ist.

Der Erfindung liegt die Aufgabe zugrunde, eine Regelventilanordnung für eine Verbindungsstelle zwischen einem dentalen Instrument und einem Versorgungsschlauch anzugeben, die besonders kleinräumig gestaltet werden kann. Außerdem soll ein dentales System mit einem dentalen Instrument, einem Versorgungsschlauch und einer entsprechenden Regelventil-Anordnung angegeben werden.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Regelventil-Anordnung für eine Verbindungsvorrichtung zwischen einem dentalen Instrument und einem Versorgungsschlauch vorgesehen, die einen, sich entlang einer Längsachse erstreckenden Fluidstecknippel mit einem, sich geradlinig parallel zur Längsachse erstreckenden Fluidkanal-Abschnitt aufweist. Weiterhin umfasst die Regelventil-Anordnung eine, den Fluidkanal-Abschnitt quer kreuzende Bohrung mit einem, auf Höhe des Fluidkanal-Abschnitts gebildeten kegelförmigen Bereich sowie ein Verschlussteil, das in der Bohrung zwischen einer Verschluss-Stellung und einer Offen-Stellung hin und her beweglich gelagert ist, wobei in der Verschluss-Stellung der Fluidkanal-Abschnitt verschlossen ist und in der Offen-Stellung der Fluidkanal-Abschnitt geöffnet ist. Dabei weist das Verschlussteil eine kegelförmige Dichtfläche auf, die in der Verschluss-Stellung dichtend gegen den kegelförmigen Bereich anliegt.

Durch diese Gestaltung lässt sich insbesondere eine zuverlässige Abdichtung des Fluidkanal-Abschnitts erzielen, wenn sich das Verschlussteil in der Verschluss-Stellung befindet. Im Unterschied zum eingangs genannten Stand der Technik kann hier kein "Überquetschen" stattfinden. Eine zuverlässige Dicht-Funktion ist dabei deutlich weniger abhängig von Toleranzen und Verschleißerscheinungen.

Vorzugsweise steht das Verschlussteil weder in der Verschluss-Stellung, noch in der Offen-Stellung in einer Richtung quer zur Längsachse über den Fluidstecknippel über. Dies ist raumsparend und montagefreundlich.

Vorzugsweise weist die Regelventil-Anordnung weiterhin eine Feder auf, die das Verschlussteil in die Verschluss-Stellung drückend angeordnet ist. Dies ist vorteilhaft mit Bezug auf eine sichere Positionierung des Verschlussteils in der Verschluss-Stellung.

Vorzugsweise ist der Fluidkanal-Abschnitt in dem Fluidstecknippel außer-zentrisch ausgebildet. Hierdurch lässt sich der Fluidstecknippel besonders raumsparend so gestalten, dass sein Querschnitt auf Höhe des Verschlussteils besonders gut an den Raum angepasst ist, der für die Bewegung des Verschlussteils mit seiner kegelförmigen Dichtfläche und für die Feder erforderlich ist.

Vorzugsweise weist die Regelventil-Anordnung weiterhin einen weiteren sich geradlinig parallel zur Längsachse erstreckenden Fluidkanal-Abschnitt auf, der leitend mit dem zuerst genannten Fluidkanal-Abschnitt verbunden ist, wobei vorzugsweise der weitere Fluidkanal-Abschnitt in dem Fluidstecknippel zentrisch ausgebildet ist. So lässt sich erzielen, dass ein Ausgang des Fluidkanals an dem Fluidstecknippel geeignet positioniert, beispielsweise zentrisch positioniert gestaltet ist.

Vorzugsweise sind dabei der weitere Fluidkanal-Abschnitt und der zuerst genannte Fluidkanal-Abschnitt unmittelbar in einander übergehend gebildet. So lässt sich erzielen, dass zur Herstellung der Regelventil-Anordnung keine quer bzw. radial verlaufende Verbindung zwischen den beiden genannten Fluidkanal-Abschnitt hergestellt werden muss.

Vorzugsweise ist der zuerst genannte Fluidkanal-Abschnitt durch eine Bohrung von einer ersten Seite des Fluidstecknippels gebildet und der weitere Fluidkanal-Abschnitt durch eine Bohrung von einer, der ersten Seite gegenüberliegenden zweiten Seite des Fluidstecknippels gebildet. Dies ist herstellungstechnisch vorteilhaft.

Vorzugsweise weist die Regelventil-Anordnung funktionell vorteilhaft außerdem ein Rückschlagventil auf, das in dem Fluidkanal-Abschnitt angeordnet ist. Dabei ist es besonders raumsparend, wenn das Rückschlagventil in einem erweiterten Bereich des Fluidkanal-Abschnitts angeordnet ist.

Vorzugsweise weist die Regelventil-Anordnung weiterhin zwei, außen am Fluidstecknippel umlaufende Dichtringe auf, die auf gegenüberliegenden Seiten der sich quer erstreckenden Bohrung angeordnet sind. So lässt sich erzielen, dass sich der Bereich um das Verschlussteil herum geeignet abdichten lässt. Vorzugsweise sind hierzu weiterhin die zwei Dichtringe jeweils in einer, an der Außenfläche des Fluidstecknippels gebildeten Nut eingelegt.

Vorzugsweise weist die Regelventil-Anordnung weiterhin ein Gehäuse auf, das mit Bezug auf die Längsachse den Fluidstecknippel radial umgebend angeordnet ist sowie einen, radial beweglich in dem Gehäuse gelagerten Stößel, wobei durch eine Bewegung des Stößels das Verschlussteil aus der Verschluss-Stellung in die Offen-Stellung gedrückt werden kann. Auf diese Weise lässt sich insbesondere erzielen, dass sich die Regelventil-Anordnung besonders einfach montieren lässt.

Vorzugsweise weist die Regelventil-Anordnung weiterhin einen Drehring auf, der mit Bezug auf die Längsachse das Gehäuse radial umgibt, wobei der Drehring drehbar gegenüber dem Gehäuse gelagert angeordnet ist und eine mit dem Stößel zusammenwirkende Kulissenfläche aufweist, derart, dass durch eine erste Drehung des Drehrings gegenüber dem Gehäuse der Stößel so radial einwärts bewegt wird, dass sich hierdurch das Verschlussteil aus der Verschluss-Stellung in die Offen-Stellung bewegt. So lässt sich eine vorteilhafte Handhabungsmöglichkeit zur Bedienung der Regelventil-Anordnung erzielen. Weiterhin vorzugsweise ist dabei die Gestaltung derart, dass durch eine, der ersten Drehung entgegen gerichtete zweite Drehung des Drehrings gegenüber dem Gehäuse der Stößel durch die Feder so radial auswärts gedrückt wird, dass sich hierdurch das Verschlussteil aus der Offen-Stellung in die Verschluss-Stellung bewegt.

Vorzugsweise ist in dem Drehring wenigstens eine Kalotten-förmige Ausnehmung gebildet, in die eine unter Vorspannung im Gehäuse gelagerte Kugel eingreifen kann, wenn sich der Drehring in einer bestimmten Drehstellung gegenüber dem Gehäuse befindet. So lässt sich erzielen, dass ein Nutzer der Regelventil-Anordnung eine bestimmte Ventilstellung besonders einfach einstellen kann.

Gemäß einem weiteren Aspekt der Erfindung ist ein dentales System vorgesehen, das ein dentales Instrument aufweist, insbesondere in Form eines Piezo-Scalers, einen, mit dem Instrument verbundenen Versorgungsschlauch und eine anmeldungsgemäße Regelventil-Anordnung. Dabei ist durch den Fluidkanal-Abschnitt der Regelventil-Anordnung eine in dem Versorgungsschlauch verlaufende Medienleitung mit einer, in dem Instrument verlaufenden Medienleitung verbindbar.

Die Erfindung wird im Folgenden anhand von Ausführungsbeispielen und mit Bezug auf die Zeichnungen näher erläutert. Es zeigen:
- Fig. 1: eine perspektivische Skizze eines Endbereichs eines Versorgungsschlauchs, verbunden mit einer Verbindungsvorrichtung, die eine anmeldungsgemäße Regelventil-Anordnung aufweist,
- Fig. 2: eine Längsschnitt-Darstellung eines Fluidstecknippels der anmeldungsgemäßen Regelventil-Anordnung,
- Fig. 3: eine Längsschnitt-Darstellung um die in der Verbindungsvorrichtung angeordnete Regelventil-Anordnung,
- Fig. 4a: eine Längsschnitt-Darstellung eines Bereichs um das Verschlussteil der Regelventil-Anordnung, wobei sich das Verschlussteil in der Offen-Stellung befindet,
- Fig. 4b: eine Längsschnitt-Darstellung eines Bereichs um das Verschlussteil der Regelventil-Anordnung, wobei sich das Verschlussteil in der Verschluss-Stellung befindet,
- Fig. 5a: eine, zu der Darstellung der Fig. 4a korrespondierende Querschnitt-Darstellung,
- Fig. 5b: eine, zu der Darstellung der Fig. 4b korrespondierende Querschnitt-Darstellung,
- Fig. 6: eine Längsschnitt-Darstellung einer Multiflex-Kupplung gemäß dem Stand der Technik und
- Figuren 7 bis 9: unterschiedliche dentale Vorrichtungen, jeweils mit einer anmeldungsgemäßen Regelventil-Anordnung.

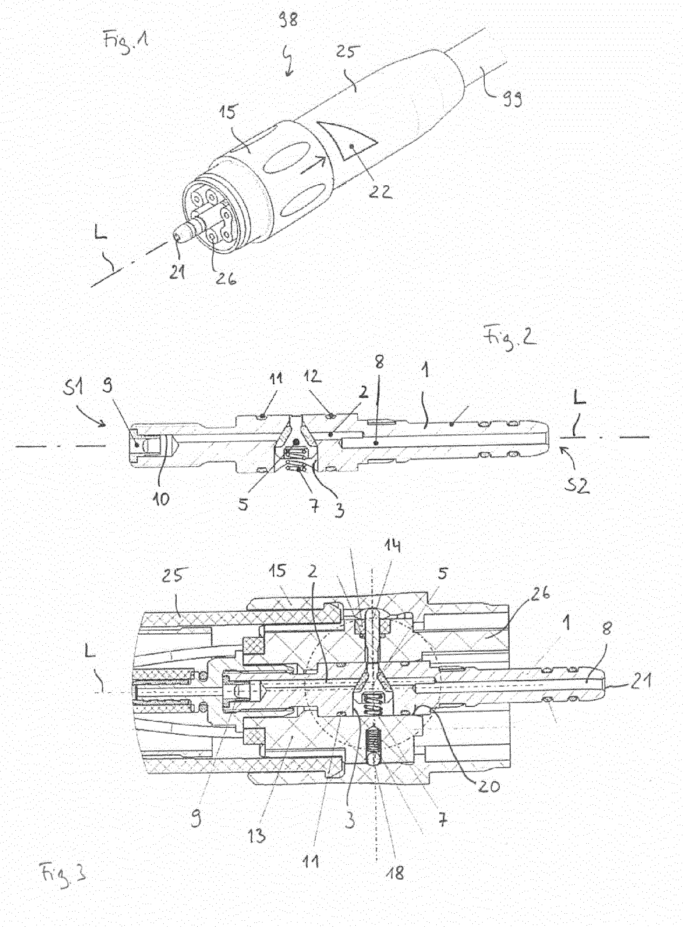

Fig. 1 zeigt eine perspektivische Skizze einer Verbindungsvorrichtung 98 zwischen einem dentalen Instrument und einem Versorgungsschlauch 99, die eine anmeldungsgemäße Regelventil-Anordnung aufweist. Die Verbindungsvorrichtung 98 ist insgesamt länglich und erstreckt sich entlang einer Längsachse L. Die in Fig. 1 gezeigte Verbindungsvorrichtung 98 kann als "Dentalkupplung" bezeichnet werden.

Fig. 3 zeigt einen Längsschnitt eines Endbereichs der Verbindungsvorrichtung 98. Die Regelventil-Anordnung, hier im Folgenden auch kurz als Anordnung bezeichnet, umfasst einen Fluidstecknippel 1, der sich entlang einer Längsachse, die hier mit der oben genannten Längsachse L identisch ist, erstreckt. Wie aus Fig. 2 ersichtlich, die einen Längsschnitt des Fluidstecknippels 1 zeigt, weist dieser einen, sich geradlinig parallel zur Längsachse L erstreckenden Fluidkanal-Abschnitt 2 auf. Beispielsweise kann der Fluidkanal-Abschnitt 2 zum Leiten eines Spraywassers vorgesehen sein. Mit Bezug auf die Darstellungen der Figuren 2 und 3 ist dabei für ein in dem Fluidkanal-Abschnitt 2 befindliches Medium - also beispielsweise für das Spraywasser - eine Fließrichtung von links nach rechts vorgesehen.

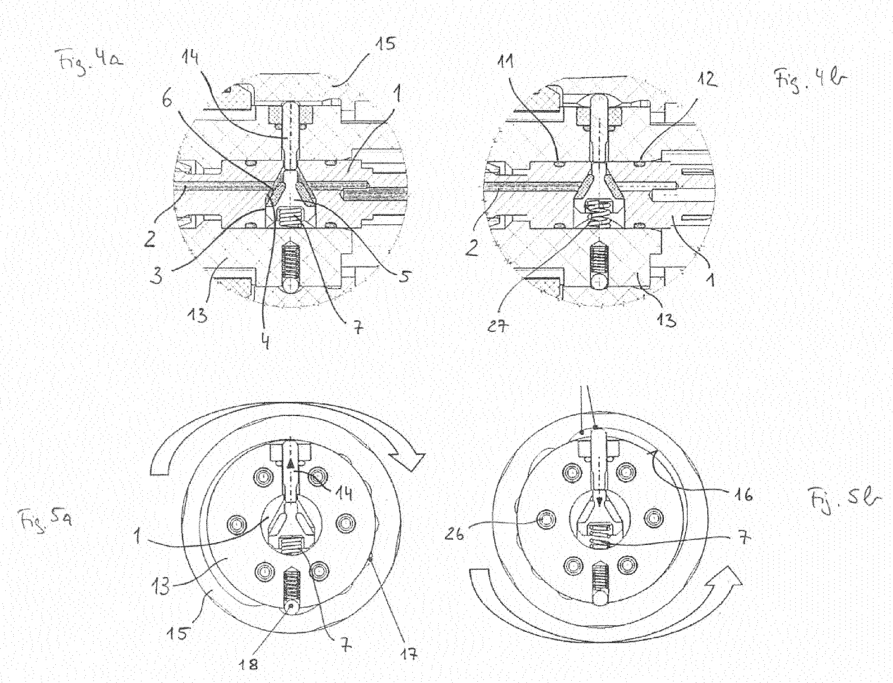

Wie u. a. in der Detaildarstellung aus Fig. 4a bezeichnet, weist der Fluidstecknippel 1 eine, den Fluidkanal-Abschnitt 2 quer, insbesondere rechtwinklig kreuzende Bohrung 3 mit einem, auf Höhe des Fluidkanal-Abschnitts 2 gebildeten kegelförmigen Bereich 4 auf. Außerdem weist der Fluidstecknippel 1 ein Verschlussteil 5 auf, das in der Bohrung 3 zwischen einer - in Fig. 4b gezeigten - Verschluss-Stellung und einer - in Fig. 4a gezeigten - Offen-Stellung hin und her beweglich gelagert ist, wobei in der Verschluss-Stellung der Fluidkanal-Abschnitt 2 verschlossen ist und in der Offen-Stellung der Fluidkanal-Abschnitt 2 geöffnet ist.

Das Verschlussteil 5 weist dabei eine kegelförmige Dichtfläche 6 auf, die in der Verschluss-Stellung dichtend gegen den kegelförmigen Bereich 4 anliegt.

Im gezeigten Beispiel weist die Regelventil-Anordnung weiterhin ein Gehäuse 13 auf, das mit Bezug auf die Längsachse L den Fluidstecknippel 1 radial umgebend angeordnet ist. Wie gezeigt, kann das Gehäuse 13 eine Durchgangsöffnung 20 aufweisen, die sich entlang der Längsachse L erstreckt, wobei der Fluidstecknippel 1 in die Durchgangsöffnung 20 eingesetzt angeordnet ist.

Wie insbesondere aus den Figuren 2, 4a und 4b ersichtlich, steht das Verschlussteil 5 weder in der Verschluss-Stellung, noch in der Offen-Stellung in einer Richtung quer zur Längsachse L über den Fluidstecknippel 1 über. So lässt sich der Fluidstecknippel 1 mit dem Verschlussteil 5 besonders geeignet montieren, insbesondere in der Durchgangsöffnung 20 des Gehäuses 13.

Vorzugsweise weist die Regelventil-Anordnung weiterhin eine Feder 7, insbesondere in Form einer Druckfeder auf, die das Verschlussteil 5 in die Verschluss-Stellung drückend angeordnet ist. Im gezeigten Beispiel liegt die Feder 7 einerseits an dem Verschlussteil 5 an und andererseits an einer, durch die Durchgangsöffnung 20 des Gehäuses 13 gebildeten Innenwand des Gehäuses 13. Dies geht auch aus den Figuren 5a und 5b hervor, die den Darstellungen aus den Figuren 4a und 4b korrespondierende Querschnitte zeigen.

Vorzugsweise weist das Verschlussteil 5 für ein zuverlässiges Zusammenwirken mit der Feder 7 auf einer, der Dichtfläche 6 gegenüberliegenden Seite eine Ausnehmung 27 auf, in die die Feder 7 eingreifend angeordnet ist.

Vorzugsweise ist der Fluidkanal-Abschnitt 2 in dem Fluidstecknippel 1 außer-zentrisch ausgebildet. So lässt sich erzielen, dass der Fluidstecknippel 1 im Bereich des Verschlussteils 5 mit einer besonders kleinen Querschnittfläche gestaltet werden kann. Im gezeigten Beispiel ist der Fluidkanal-Abschnitt 2 so gestaltet, dass er - in einem Querschnitt in unmittelbarer Nachbarschaft der kreuzenden Bohrung 3 betrachtet - mit seinem Hohlraum vollständig außerhalb des Zentrums des Fluidstecknippels 1 verläuft.

Wie weiterhin beispielsweise aus Fig. 2 hervorgeht, weist die Regelventil-Anordnung außerdem einen weiteren, sich geradlinig parallel zur Längsachse L erstreckenden Fluidkanal-Abschnitt 8 auf, der leitend mit dem zuerst genannten Fluidkanal-Abschnitt 2 verbunden ist; dabei ist dieser weitere Fluidkanal-Abschnitt 8 vorzugsweise in dem Fluidstecknippel 1 ausgebildet, und zwar insbesondere zentrisch ausgebildet. So lässt sich erzielen, dass ein Ausgang 21 des weiteren Fluidkanal-Abschnitts 8 an dem Fluidstecknippel 1 geeignet positioniert, beispielsweise zentrisch positioniert gestaltet ist. Dabei ist die Gestaltung derart, dass das betreffende Medium, also beispielsweise das Spraywasser durch den zuerst genannten Fluidkanal-Abschnitt 2 strömen kann und von dort weiter durch den weiteren Fluidkanal-Abschnitt 8 und schließlich den Fluidstecknippel 1 durch den Ausgang 21 verlässt.

Wie beispielhaft in Fig. 2 skizziert, sind vorzugsweise der weitere Fluidkanal-Abschnitt 8 und der zuerst genannte Fluidkanal-Abschnitt 2 unmittelbar in einander übergehend gebildet. So lässt sich vermeiden, dass zur Herstellung des Fluidstecknippels 1 die beiden genannten Fluidkanal-Abschnitte 2, 8 über eine sich radial erstreckende Verbindungsöffnung miteinander verbunden werden müssen.

Im gezeigten Beispiel kann - herstellungstechnisch vorteilhaft - der zuerst genannte Fluidkanal-Abschnitt 2 durch eine Bohrung von einer ersten Seite S1 des Fluidstecknippels 1 gebildet sein und der weitere Fluidkanal-Abschnitt 8 durch eine Bohrung von einer, der ersten Seite S1 gegenüberliegenden zweiten Seite S2 des Fluidstecknippels 1.

Wie im gezeigten Beispiel der Fall, weist die Regelventil-Anordnung vorzugsweise weiterhin ein Rückschlagventil 9 auf, das in dem Fluidkanal-Abschnitt 2 angeordnet ist. Dabei ist das Rückschlagventil 9 vorzugsweise raumsparend in einem erweiterten Bereich 10 des Fluidkanal-Abschnitts 2 angeordnet. Hierdurch lässt sich vermeiden, dass ein in dem Fluidkanal-Abschnitt 2 befindliches Medium, wie beispielsweise das oben bereits genannte Spraywasser, entgegen der vorgesehenen Fließrichtung aus dem Fluidkanal-Abschnitt 2 herausfließt. Vorzugsweise ist der erweiterte Bereich 10 an einem Ende des Fluidkanal-Abschnitts 2 gebildet, der der Verbindung zu dem weiteren Fluidkanal-Abschnitt 8 gegenüberliegt. Mit Bezug auf die Darstellung der Fig. 2 befindet sich der erweiterte Bereich 10 in diesem Sinn am linken Ende des Fluidkanal-Abschnitts 2. Herstellungstechnisch vorteilhaft kann der erweiterte Bereich 10 dadurch gebildet sein, dass die Bohrung von der ersten Seite S1, durch die der zuerst genannte Fluidkanal-Abschnitt 2 gebildet ist, als Stufenbohrung gestaltet ist.

Eine besonders geeignete Abdichtung des Bereichs um das Verschlussteil 5 lässt sich erzielen, wenn die Regelventil-Anordnung weiterhin zwei, außen am Fluidstecknippel 1 umlaufende - beispielsweise in Fig. 4b bezeichnete - Dichtringe 11, 12 aufweist, die auf gegenüberliegenden Seiten der sich quer erstreckenden Bohrung 3 angeordnet sind. Dabei sind die zwei Dichtringe 11, 12 weiterhin vorzugsweise jeweils in einer, an der Außenfläche des Fluidstecknippels 1 gebildeten Nut eingelegt. Im gezeigten Beispiel liegen die Dichtringe 11, 12 außerdem dichtend an der durch die Durchgangsöffnung 20 des Gehäuses 13 gebildeten Innenwand des Gehäuses 13 an.

Weiterhin vorzugsweise weist die Regelventil-Anordnung außerdem einen, radial beweglich in dem Gehäuse 13 gelagerten Stößel 14 auf, wobei durch eine Bewegung des Stößels 14 das Verschlussteil 5 aus der Verschluss-Stellung in die Offen-Stellung gedrückt werden kann. Durch das Vorsehen der zwei Teile "Verschlussteil 5" einerseits und "Stößel 14" andererseits lässt sich erzielen, dass sich die Regelventil-Anordnung besonders einfach montieren lässt.

Vorzugsweise weist die Regelventil-Anordnung weiterhin einen Drehring 15 auf, der mit Bezug auf die Längsachse L das Gehäuse 13 radial umgibt, wobei der Drehring 15 drehbar gegenüber dem Gehäuse 13 gelagert angeordnet ist und eine mit dem Stößel 14 zusammenwirkende Kulissenfläche 16 aufweist, derart, dass durch eine erste Drehung des Drehrings 15 gegenüber dem Gehäuse 13 der Stößel 14 so radial einwärts bewegt wird, dass sich hierdurch das Verschlussteil 5 aus der Verschluss-Stellung in die Offen-Stellung bewegt. Diese erste Drehung ist in Fig. 5b mit einem Pfeil angedeutet. Man erkennt, dass durch die erste Drehung die Kulissenfläche 16 den Stößel 14 radial einwärts bewegt und das Verschlussteil 5 auf diese Weise aus der Verschluss-Stellung heraus in Richtung Offen-Stellung bewegt wird.

Weiterhin vorzugsweise ist die Gestaltung derart, dass durch eine, der ersten Drehung entgegen gerichtete zweite Drehung des Drehrings 15 gegenüber dem Gehäuse 13 der Stößel 14 durch die Feder 7 so radial auswärts gedrückt wird, dass sich hierdurch das Verschlussteil 5 aus der Offen-Stellung in die Verschluss-Stellung bewegt. Diese zweite Drehung ist in Fig. 5a mit einem Pfeil angedeutet. Man erkennt, dass durch die zweite Drehung der Stößel 14 durch die Wirkung der Feder 7 radial auswärts bewegt wird und das Verschlussteil 5 auf diese Weise aus der Offen-Stellung heraus in Richtung Verschluss-Stellung bewegt wird.

Das Verschlussteil 5 lässt sich also mit Hilfe des Stößels 14 mehr oder weniger weit öffnen. Vorzugsweise ist in dem Drehring 15 wenigstens eine Kalotten-förmige Ausnehmung 17 gebildet ist, in die eine unter Vorspannung im Gehäuse 13 gelagerte Kugel 18 eingreifen kann, wenn sich der Drehring 15 in einer bestimmten Drehstellung gegenüber dem Gehäuse 13 befindet. So kann ein Nutzer der Regelventil-Anordnung eine bestimmte Ventilstellung leicht erkennen.

Insbesondere können mehrere entsprechende Ausnehmungen 17 in der Kulissenfläche 16 vorgesehen sein, um entsprechend viele unterschiedliche Ventilstellungen leicht erkennbar zu machen. Dabei kann durch die zwei entsprechend gebildeten endseitigen Ausnehmungen 17 der Einstell- bzw. Drehbereich begrenzt sein.

Im gezeigten Beispiel weist die Verbindungsvorrichtung 98 eine Griffhülse 25 auf, wobei der Drehring 15 drehbar gegenüber der Griffhülse 25 gelagert ist. Die Griffhülse 25 ist dabei drehfest mit dem Gehäuse 13 verbunden. Auf der Außenseite der Griffhülse 25 kann ein Symbol 22 oder Ähnliches vorgesehen sein, um für den Nutzer kenntlich zu machen, bei welcher Drehrichtung des Drehrings 15 sich der Verschlusskörper 5 schließt und bei welcher er sich öffnet.

Die in Fig. 1 skizzierte Verbindungsvorrichtung 98 stellt mithin eine anmeldungsgemäße Verbindungsvorrichtung mit einer anmeldungsgemäßen Regelventil-Anordnung dar.

Bei dem dentalen Instrument kann es sich insbesondere um ein Piezohandstück bzw. um einen Piezo-Scaler handeln. In diesem Fall eignet sich die Verbindungsvorrichtung 98 aufgrund der besonders kleinräumigen Gestaltung der Regelventil-Anordnung besonders. Wie eingangs erwähnt, wird bei einem Piezohandstück das Spraywasser typischerweise zentral geleitet. Das ist auch bei der in den Figuren 1 bis 5b gezeigten Ausgestaltung der Verbindungsvorrichtung 98 der Fall. Dabei können radial um den Ausgang 21 herum viele, im gezeigten Beispiel sechs elektrische Kontaktbereiche 26 angeordnet sein.

Gemäß der Anmeldung ist weiterhin ein dentales System vorgesehen, das ein entsprechendes dentales Instrument aufweist, also beispielsweise einen Piezo-Scaler, einen, mit dem Instrument verbundenen Versorgungsschlauch 99 und eine anmeldungsgemäße Regelventil-Anordnung, insbesondere als Bestandteil einer entsprechenden Verbindungsvorrichtung. Dabei ist durch den Fluidkanal-Abschnitt 2 und den weiteren Fluidkanal-Abschnitt 8 der Regelventil-Anordnung eine in dem Versorgungsschlauch 99 verlaufende Medienleitung mit einer, in dem Instrument verlaufenden Medienleitung verbindbar.

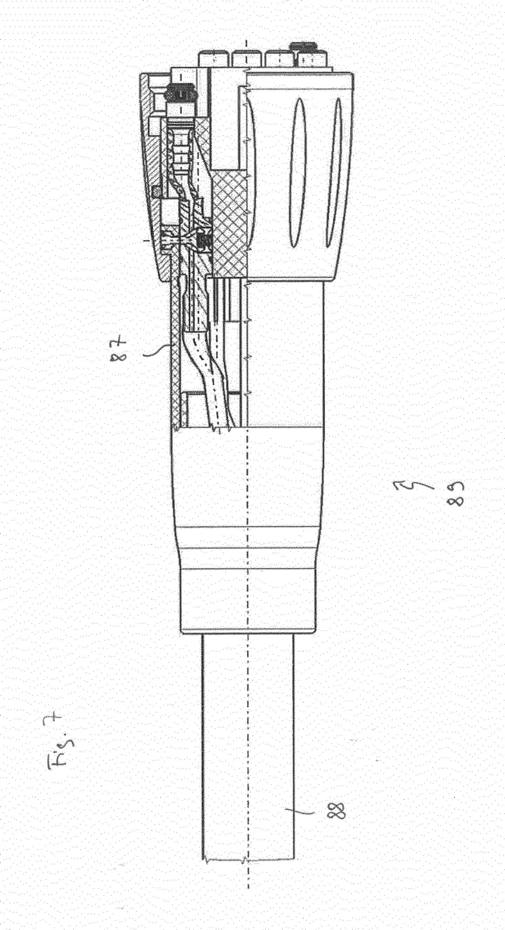

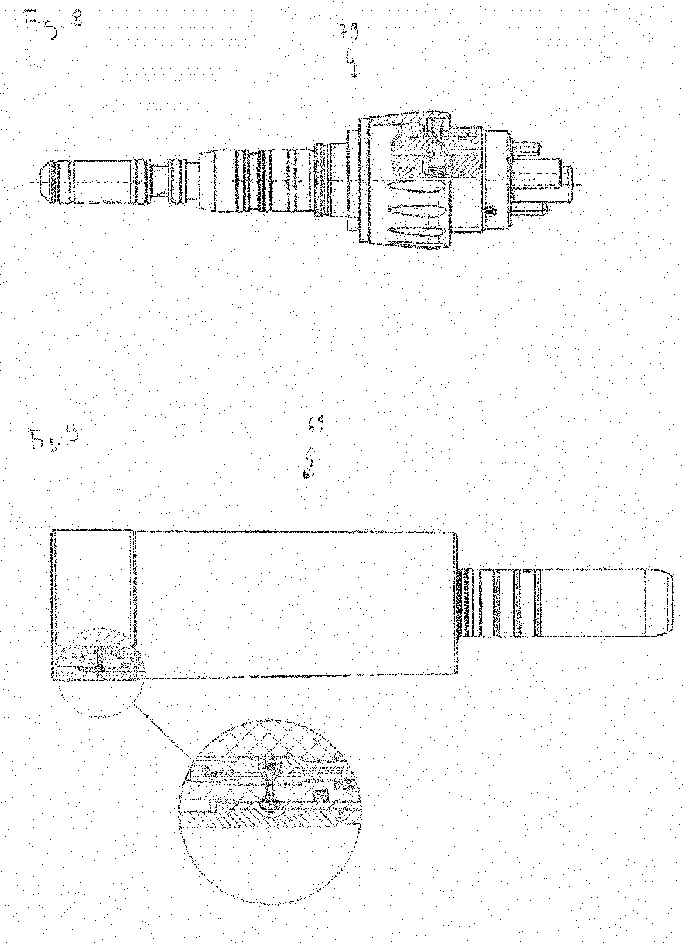

In Fig. 7 ist eine weitere dentale Verbindungsvorrichtung 89 skizziert, die an einem Versorgungsschlauch 88 angeordnet ist. Hier ist eine entsprechende Regelventil-Anordnung radial außermittig mit Bezug auf eine entsprechende Griffhülse 87 der Verbindungsvorrichtung 89 angeordnet. Fig. 8 zeigt eine weitere Verbindungsvorrichtung 79, hier ohne Versorgungsschlauch, bei der die Regelventil-Anordnung ebenfalls außermittig angeordnet ist. Fig. 9 zeigt eine dentale Motorvorrichtung 69, die an einem rückwärtigen Endbereich radial randseitig eine entsprechende Regelventil-Anordnung aufweist.

## Patentansprüche

1. Regelventil-Anordnung für eine Verbindungsvorrichtung zwischen einem dentalen Instrument und einem Versorgungsschlauch, aufweisend
- einen, sich entlang einer Längsachse (L) erstreckenden Fluidstecknippel (1) mit einem, sich geradlinig parallel zur Längsachse (L) erstreckenden Fluidkanal-Abschnitt (2),
**gekennzeichnet durch**
- eine, den Fluidkanal-Abschnitt (2) quer kreuzende Bohrung (3) mit einem, auf Höhe des Fluidkanal-Abschnitts (2) gebildeten kegelförmigen Bereich (4) und
- ein Verschlussteil (5), das in der Bohrung (3) zwischen einer Verschluss-Stellung und einer Offen-Stellung hin und her beweglich gelagert ist, wobei in der Verschluss-Stellung der Fluidkanal-Abschnitt (2) verschlossen ist und in der Offen-Stellung der Fluidkanal-Abschnitt (2) geöffnet ist,
wobei das Verschlussteil (5) eine kegelförmige Dichtfläche (6) aufweist, die in der Verschluss-Stellung dichtend gegen den kegelförmigen Bereich (4) anliegt.

2. Regelventil-Anordnung nach Anspruch 1,
**dadurch gekennzeichnet,**
**dass** das Verschlussteil (5) weder in der Verschluss-Stellung, noch in der Offen-Stellung in einer Richtung quer zur Längsachse (L) über den Fluidstecknippel (1) übersteht.

3. Regelventil-Anordnung nach Anspruch 1 oder 2,
**gekennzeichnet durch**
- eine Feder (7) die das Verschlussteil (5) in die Verschluss-Stellung drückend angeordnet ist.

4. Regelventil-Anordnung nach einem der vorhergehenden Ansprüche,
**dadurch gekennzeichnet,**
**dass** der Fluidkanal-Abschnitt (2) in dem Fluidstecknippel (1) außer-zentrisch ausgebildet ist.

5. Regelventil-Anordnung nach einem der vorhergehenden Ansprüche, **gekennzeichnet durch**
- einen weiteren sich geradlinig parallel zur Längsachse (L) erstreckenden Fluidkanal-Abschnitt (8), der leitend mit dem zuerst genannten Fluidkanal-Abschnitt (2) verbunden ist, wobei vorzugsweise der weitere Fluidkanal-Abschnitt (8) in dem Fluidstecknippel (1) zentrisch ausgebildet ist.

6. Regelventil-Anordnung nach Anspruch 5,
**dadurch gekennzeichnet,**
**dass** der weitere Fluidkanal-Abschnitt (8) und der zuerst genannte Fluidkanal-Abschnitt (2) unmittelbar in einander übergehend gebildet sind.

7. Regelventil-Anordnung nach Anspruch 5 oder 6,
**dadurch gekennzeichnet,**
**dass** der zuerst genannte Fluidkanal-Abschnitt (2) durch eine Bohrung von einer ersten Seite (S1) des Fluidstecknippels (1) gebildet ist und der weitere Fluidkanal-Abschnitt (8) durch eine Bohrung von einer, der ersten Seite (S1) gegenüberliegenden zweiten Seite (S2) des Fluidstecknippels (1) gebildet ist.

8. Regelventil-Anordnung nach einem der vorhergehenden Ansprüche, **gekennzeichnet durch**
- ein Rückschlagventil (9), das in dem Fluidkanal-Abschnitt (2) angeordnet ist.

9. Regelventil-Anordnung nach Anspruch 8,
**dadurch gekennzeichnet,**
**dass** das Rückschlagventil (9) in einem erweiterten Bereich (10) des Fluidkanal-Abschnitts (2) angeordnet ist.

10. Regelventil-Anordnung nach einem der vorhergehenden Ansprüche, **gekennzeichnet durch**
- zwei, außen am Fluidstecknippel (1) umlaufende Dichtringe (11, 12), die auf gegenüberliegenden Seiten der sich quer erstreckenden Bohrung (3) angeordnet sind.

11. Regelventil-Anordnung nach Anspruch 10,
**dadurch gekennzeichnet,**
**dass** die zwei Dichtringe (11, 12) jeweils in einer, an der Außenfläche des Fluidstecknippels (1) gebildeten Nut eingelegt sind.

12. Regelventil-Anordnung nach einem der vorhergehenden Ansprüche, **gekennzeichnet durch**
- ein Gehäuse (13), das mit Bezug auf die Längsachse (L) den Fluidstecknippel (1) radial umgebend angeordnet ist und
- einen, radial beweglich in dem Gehäuse (13) gelagerten Stößel (14), wobei durch eine Bewegung des Stößels (14) das Verschlussteil (5) aus der Verschluss-Stellung in die Offen-Stellung gedrückt werden kann.

13. Regelventil-Anordnung nach Anspruch 12,
**gekennzeichnet durch**
- einen Drehring (15), der mit Bezug auf die Längsachse (L) das Gehäuse (13) radial umgibt, wobei der Drehring (15) drehbar gegenüber dem Gehäuse (13) gelagert angeordnet ist und eine mit dem Stößel (14) zusammenwirkende Kulissenfläche (16) aufweist, derart, dass durch eine erste Drehung des Drehrings (15) gegenüber dem Gehäuse (13) der Stößel (14) so radial einwärts bewegt wird, dass sich hierdurch das Verschlussteil (5) aus der Verschluss-Stellung in die Offen-Stellung bewegt.

14. Regelventil-Anordnung nach einem der vorhergehenden Ansprüche,
mit den in den Ansprüchen 2 und 12 genannten Merkmalen,
**dadurch gekennzeichnet,**
**dass** durch eine, der ersten Drehung entgegen gerichtete zweite Drehung des Drehrings (15) gegenüber dem Gehäuse (13) der Stößel (14) durch die Feder (7) so radial auswärts gedrückt wird, dass sich hierdurch das Verschlussteil (5) aus der Offen-Stellung in die Verschluss-Stellung bewegt.

15. Regelventil-Anordnung nach Anspruch 13 oder 14,
**dadurch gekennzeichnet,**
**dass** in dem Drehring (15) wenigstens eine Kalotten-förmige Ausnehmung (17) gebildet ist, in die eine unter Vorspannung im Gehäuse (13) gelagerte Kugel (18) eingreifen kann, wenn sich der Drehring (15) in einer bestimmten Drehstellung gegenüber dem Gehäuse (13) befindet.

16. Dentales System, aufweisend
- ein dentales Instrument, insbesondere in Form eines Piezo-Scalers,
- einen, mit dem Instrument verbundenen Versorgungsschlauch und
- eine Regelventil-Anordnung nach einem der vorhergehenden Ansprüche, wobei durch den Fluidkanal-Abschnitt (2) der Regelventil-Anordnung eine in dem Versorgungsschlauch verlaufende Medienleitung mit einer, in dem Instrument verlaufenden Medienleitung verbindbar ist.

## Claims

1. Regulating valve arrangement for a connecting apparatus between a dental instrument and a supply hose, having
- a fluid plug-in nipple (1) which extends along a longitudinal axis (L) and has a fluid channel section (2) which extends rectilinearly parallel to the longitudinal axis (L),
**characterized by**
- a bore (3) which crosses the fluid channel section (2) transversely and has a conical region (4) which is formed at the height of the fluid channel section (2), and
- a closure part (5) which is mounted in the bore (3) in a manner movable back and forth between a closed position and an open position, wherein, in the closed position, the fluid channel section (2) is closed and, in the open position, the fluid channel section (2) is open,
wherein the closure part (5) has a conical sealing surface (6) which, in the closed position, bears sealingly against the conical region (4).

2. Regulating valve arrangement according to Claim 1,
**characterized**
**in that**, neither in the closed position nor in the open position, does the closure part (5) project beyond the fluid plug-in nipple (1) in a direction transverse to the longitudinal axis (L).

3. Regulating valve arrangement according to Claim 1 or 2,
**characterized by**
- a spring (7) which is arranged in a manner pushing the closure part (5) into the closure position.

4. Regulating valve arrangement according to one of the preceding claims, **characterized**
**in that** the fluid channel section (2) is formed eccentrically in the fluid plug-in nipple (1).

5. Regulating valve arrangement according to one of the preceding claims, **characterized by**
- a further fluid channel section (8), which extends rectilinearly parallel to the longitudinal axis (L) and is connected in a conducting manner to the fluid channel section (2) mentioned first, wherein preferably the further fluid channel section (8) is formed centrally in the fluid plug-in nipple (1).

6. Regulating valve arrangement according to Claim 5,
**characterized**
**in that** the further fluid channel section (8) and the fluid channel section (2) mentioned first are formed in a manner transitioning directly one into the other.

7. Regulating valve arrangement according to Claim 5 or 6,
**characterized**
**in that** the fluid channel section (2) mentioned first is formed by a bore from a first side (S1) of the fluid plug-in nipple (1), and the further fluid channel section (8) is formed by a bore from a second side (S2), opposite the first side (S1), of the fluid plug-in nipple (1).

8. Regulating valve arrangement according to one of the preceding claims, **characterized by**
- a check valve (9) which is arranged in the fluid channel section (2).

9. Regulating valve arrangement according to Claim 8,
**characterized**
**in that** the check valve (9) is arranged in a widened region (10) of the fluid channel section (2).

10. Regulating valve arrangement according to one of the preceding claims, **characterized by**
- two sealing rings (11, 12) which run around the outside of the fluid plug-in nipple (1) and are arranged on opposite sides of the transversely extending bore (3).

11. Regulating valve arrangement according to Claim 10,
**characterized**
**in that** the two sealing rings (11, 12) are each placed in a groove formed in the outer surface of the fluid plug-in nipple (1).

12. Regulating valve arrangement according to one of the preceding claims, **characterized by**
- a housing (13) which is arranged in a manner surrounding the fluid plug-in nipple (1) radially with respect to the longitudinal axis (L), and
- a pusher (14) which is mounted radially movably in the housing (13), wherein, by way of a movement of the pusher (14), the closure part (5) can be pushed from the closed position into the open position.

13. Regulating valve arrangement according to Claim 12,
**characterized by**
- a rotary ring (15) which surrounds the housing (13) radially with respect to the longitudinal axis (L), wherein the rotary ring (15) is arranged in a manner mounted so as to be rotatable with respect to the housing (13) and has a slotted guide surface (16) which interacts with the pusher (14), such that, by way of a first rotation of the rotary ring (15) with respect to the housing (13), the pusher (14) is moved radially inwards such that, in this way, the closure part (5) is moved from the closure position into the open position.

14. Regulating valve arrangement according to one of the preceding claims, with the features stated in Claims 2 and 12,
**characterized**
**in that**, by way of a second rotation, directed counter to the first rotation, of the rotary ring (15) with respect to the housing (13), the pusher (14) is pushed radially outwards by the spring (7) such that, in this way, the closure part (5) is moved from the open position into the closed position.

15. Regulating valve arrangement according to Claim 13 or 14,
**characterized**
**in that**, in the rotary ring (15), there is formed at least one spherical cap-shaped recess (17), into which a ball (18) mounted under pre-stress in the housing (13) can engage when the rotary ring (15) is in a specific rotary position with respect to the housing (13).

16. Dental system having
- a dental instrument, in particular in the form of a piezo scaler,
- a supply hose which is connected to the instrument, and
- a regulating valve arrangement according to one of the preceding claims,
wherein, by way of the fluid channel section (2) of the regulating valve arrangement, a media line running in the supply hose can be connected to a media line running in the instrument.

## Revendications

1. Ensemble de soupape de régulation pour un dispositif de raccordement entre un instrument dentaire et un tuyau flexible d'alimentation, présentant
- un embout d'enfichage de fluide (1) s'étendant le long d'un axe longitudinal (L) avec une section de canal de fluide (2) s'étendant en ligne droite parallèlement à l'axe longitudinal (L),
**caractérisé par**
- un perçage (3) coupant transversalement la section de canal de fluide (2) avec une zone (4) conique formée à hauteur de la section de canal de fluide (2) et
- une partie de fermeture (5) qui est logée de manière mobile alternativement dans le perçage (3) entre une position de fermeture et une position ouverte, dans lequel dans la position de fermeture la section de canal de fluide (2) est fermée et dans la position ouverte la section de canal de fluide (2) est ouverte,
dans lequel la partie de fermeture (5) présente une surface étanche (6) conique qui repose dans la position de fermeture de manière étanche contre la zone conique (4).

2. Ensemble de soupape de régulation selon la revendication 1,
**caractérisé en ce**
**que** la partie de fermeture (5) ne dépasse de l'embout d'enfichage de fluide (1) ni dans la position de fermeture, ni dans la position ouverte dans une direction transversale à l'axe longitudinal (L).

3. Ensemble de soupape de régulation selon la revendication 1 ou 2,
**caractérisé par**
- un ressort (7) qui est agencé de manière à presser la partie de fermeture (5) dans la position de fermeture.

4. Ensemble de soupape de régulation selon l'une des revendications précédentes,
**caractérisé en ce**
**que** la section de canal de fluide (2) est réalisée de manière excentrée dans l'embout d'enfichage de fluide (1).

5. Ensemble de soupape de régulation selon l'une des revendications précédentes,
**caractérisé par**
- une autre section de canal de fluide (8) s'étendant en ligne droite parallèlement à l'axe longitudinal (L) qui est reliée de manière conductrice à la section de canal de fluide tout d'abord citée (2), dans lequel de préférence l'autre section de canal de fluide (8) est réalisée de manière centrée dans le nipple d'enfichage de fluide (1).

6. Ensemble de soupape de régulation selon la revendication 5,
**caractérisé en ce**
**que** l'autre section de canal de fluide (8) et la section de canal de fluide tout d'abord citée (2) sont formées de manière à passer directement l'une dans l'autre.

7. Ensemble de soupape de régulation selon la revendication 5 ou 6,
**caractérisé en ce**
**que** la section de canal de fluide (2) tout d'abord citée est formée par un perçage d'un premier côté (S1) de l'embout d'enfichage de fluide (1) et l'autre section de canal de fluide (8) est formée par un perçage d'un second côté (S2) opposé au premier côté (S1) de l'embout d'enfichage de fluide (1).

8. Ensemble de soupape de régulation selon l'une des revendications précédentes,
**caractérisé par**
- un clapet antiretour (9) qui est agencé dans la section de canal de fluide (2).

9. Ensemble de soupape de régulation selon la revendication 8,
**caractérisé en ce**
**que** le clapet antiretour (9) est agencé dans une zone (10) élargie de la section de canal de fluide (2).

10. Ensemble de soupape de régulation selon l'une des revendications précédentes,
**caractérisé par**
- deux bagues étanches (11, 12) tournant à l'extérieur au niveau de l'embout d'enfichage de fluide (1) qui sont agencées sur des côtés opposés du perçage (3) s'étendant transversalement.

11. Ensemble de soupape de régulation selon la revendication 10,
**caractérisé en ce**
**que** les deux bagues étanches (11, 12) sont insérées respectivement dans une rainure formée au niveau de la surface extérieure du nipple d'enfichage de fluide (1).

12. Ensemble de soupape de régulation selon l'une des revendications précédentes,
**caractérisé par**
- un boîtier (13) qui est agencé entourant radialement le nipple d'enfichage de fluide (1) par rapport à l'axe longitudinal (L) et
- un coulisseau (14) logé de manière mobile radialement dans le boîtier (13), dans lequel la partie de fermeture (5) peut être pressée par un mouvement du coulisseau (14) de la position de fermeture dans la position ouverte.

13. Ensemble de soupape de régulation selon la revendication 12,
**caractérisé par**
- une bague rotative (15) qui entoure le boîtier (13) radialement par rapport à l'axe longitudinal (L), dans lequel la bague rotative (15) est agencée en étant logée de manière à pouvoir tourner par rapport au boîtier (13) et présente une surface de coulisse (16) coagissant avec le coulisseau (14) de telle manière que par une première rotation de la bague rotative (15) par rapport au boîtier (13) le coulisseau (14) soit déplacé radialement vers l'intérieur de sorte qu'ainsi la partie de fermeture (5) se déplace de la position de fermeture dans la position ouverte.

14. Ensemble de soupape de régulation selon l'une des revendications précédentes, avec les caractéristiques citées dans les revendications 2 et 12,
**caractérisé en ce**
**que** par une seconde rotation dirigée dans le sens contraire de la première rotation de la bague rotative (15) par rapport au boîtier (13) le coulisseau (14) est pressé radialement vers l'extérieur par le ressort (7) de sorte qu'ainsi la partie de fermeture (5) se déplace de la position ouverte dans la position de fermeture.

15. Ensemble de soupape de régulation selon la revendication 13 ou 14, **caractérisé en ce**
**qu'**au moins un évidement en forme de calotte (17) est formé dans la bague rotative (15), dans lequel une sphère (18) logée sous précontrainte dans le boîtier (13) peut venir en prise, lorsque la bague rotative (15) se trouve dans une position de rotation déterminée par rapport au boîtier (13).

16. Système dentaire présentant
- un instrument dentaire, en particulier sous la forme d'un dispositif de détartrage piézo,
- un tuyau flexible d'alimentation relié à l'instrument et
- un ensemble de soupape de régulation selon l'une des revendications précédentes, dans lequel une conduite de milieu s'étendant dans le tuyau flexible d'alimentation peut être reliée à une conduite de milieu s'étendant dans l'instrument par la section de canal de fluide (2) de l'ensemble de soupape de régulation.
